Europäisches Patentamt

European Patent Office

Office européen des brevets

(19)

(11) **EP 1 117 556 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **99941554.0**

(22) Anmeldetag: **10.08.1999**

(51) Int Cl.⁷: **B60K 41/22**, F16D 48/06

(86) Internationale Anmeldenummer:
**PCT/EP99/05783**

(87) Internationale Veröffentlichungsnummer:
**WO 00/13928 (16.03.2000 Gazette 2000/11)**

(54) **VERFAHREN UND EINRICHTUNG ZUM STEUERN UND REGELN EINER KUPPLUNG**

METHOD AND DEVICE FOR CONTROLLING AND REGULATING A COUPLING

PROCEDE ET DISPOSITIF POUR COMMANDER ET REGULER UN EMBRAYAGE

(84) Benannte Vertragsstaaten:
**DE FR GB IT**

(30) Priorität: **05.09.1998 DE 19840573**

(43) Veröffentlichungstag der Anmeldung:
**25.07.2001 Patentblatt 2001/30**

(73) Patentinhaber: **ZF FRIEDRICHSHAFEN Aktiengesellschaft 88038 Friedrichshafen (DE)**

(72) Erfinder:
• **VOHMANN, Martin**
  **D-73730 Esslingen (DE)**
• **DREIBHOLZ, Ralf**
  **D-88074 Meckenbeuren (DE)**

(56) Entgegenhaltungen:
**EP-A- 0 458 450      EP-A- 0 707 998**
**DE-A- 3 509 017      DE-A- 3 939 660**

**Beschreibung**

Die Erfindung betrifft ein Verfahren und eine Einrichtung zum Steuern und Regeln einer Kupplung in einem Kraftfahrzeugantrieb, bei dem ein elektronisches Steuergerät mittels eines Regelkreises das Verhalten der Kupplung bestimmt und entsprechend den Maßnahmen gemäß Oberbegriff von Anspruch 1, wie sie aus der DE-A-35 09 017 bekannt sind.

Unter Kupplung im Sinne der Erfindung ist eine Anfahrkupplung zu verstehen. Hierunter fallen Kupplungen, die zwischen einer Brennkraftmaschine und einem Automatgetriebe angeordnet sind, Wandlerüberbrückungskupplungen als auch im Automatgetriebe integrierte Kupplungen, die sowohl zum Anfahren als auch als Schaltkupplung verwendet werden können.

Ein Verfahren zum Steuern einer Anfahrkupplung ist z. B. aus der DE 44 09 122 A1 bekannt. Die Anfahrsteuerung besteht hierbei aus zwei Phasen. In einer ersten Phase wird die Eingangsdrehzahl der Kupplung auf eine Soll-Drehzahl hingeführt, wobei die Soll-Drehzahl aus der Leistungsvorgabe des Fahrers bzw. dem Gradienten und einer Fahraktivität festgelegt wird. In der zweiten Phase wird die Differenz der Eingangs- zur Ausgangsdrehzahl der Kupplung nach einem Sollwert-Verlauf auf Null reduziert.

Aus der DE 39 37 976 A1 ist ein Verfahren zur Regelung einer Kupplung bekannt, die zur Schwingungsentkopplung dient. Der Schlupf der Kupplung wird hierbei in Abhängigkeit einer am Getriebeausgang ermittelten Drehungleichförmigkeit verändert. Aus der EP 0 214 989 B2 wiederum ist es bekannt, eine im Automatgetriebe integrierte Kupplung als Anfahrelement zu verwenden.

Ausgehend vom zuvor beschriebenen Stand der Technik liegt der Erfindung die Aufgabe zugrunde, diesen im Hinblick auf die Mehrfachnutzung einer einzigen Kupplung in Verbindung mit einem Automatgetriebe weiterzuentwickeln.

Die Aufgabe wird erfindungsgemäß durch die kennzeichnenden Merkmale des ersten Anspruchs gelöst. Zur Steuerung und Regelung der Kupplung während zwei Fahrzuständen wird ausschließlich ein einziger Regelkreis verwendet wird. Die Regelgröße entspricht dem Istwert der Differenzdrehzahl der Kupplung. Die zwei Fahrzustände entsprechen hierbei einem Anfahrvorgang als erstem Zustand und dem Fahren mit variabler Übersetzung als zweitem Zustand.

Die stufenlose Verstellung des stufenlosen Getriebes bestimmt ein eigener Regelkreis, nachfolgend als zweiter Regelkreis bezeichnet, wobei der erste und zweite Regelkreis über ein Entkopplungsnetzwerk miteinander verbunden sind. Das Entkopplungsnetzwerk weist einen ersten und zweiten Signalweg auf. Über das Entkopplungsnetzwerk wird somit der Vorteil erzielt, daß die beiden Regler sich in ihrer Wirkung nicht gegenseitig beeinflussen.

Für beide Fahrzustände wird der Sollwert der Differenzdrehzahl der Kupplung aus der Addition eines Sollwert-Offset und einer übersetzungsabhängigen Differenzdrehzahl der Kupplung ermittelt. Die übersetzungsabhängige Differenzdrehzahl wird hierbei gemäß Anspruch 12 für eine Anfahrübersetzung des stufenlosen Getriebes über ein erstes Kennfeld bestimmt. Die übersetzungsabhängige Differenzdrehzahl für Nicht-Anfahrübersetzungen wird, wie in Anspruch 13 beschrieben, über zweite Kennfelder bestimmt. Sowohl das erste als auch die zweiten Kennfelder zeigen jeweils eine Zuordnung von Leistungsvorgabe des Fahrers und Abtriebsdrehzahl der Kupplung.

Die zweiten Kennfelder sind hierbei gemäß Anspruch 15 derart gestaltet, daß sich bei einer Fahrzeuggeschwindigkeit kleiner einem Grenzwert ein erhöhter Sollwert der Drehzahldifferenz ergibt. Hierdurch wird ein aktiver Abwürgeschutz für Nicht-Anfahrübersetzungen erzielt.

Die Erfindung ist nachstehend anhand des in den Zeichnungen dargestellten Ausführungsbeispiels erläutert. Es zeigen:

Fig. 1   eine Übersicht des ersten und zweiten Regelkreises;

Fig. 2   einen Funktionsblock Sollwert-Vorgabe;

Fig. 3   einen Funktionsblock Regler;

Fig. 4   ein erstes Kennfeld für Anfahrübersetzungen und

Fig. 5   ein zweites Kennfeld für Nicht-Anfahrübersetzungen.

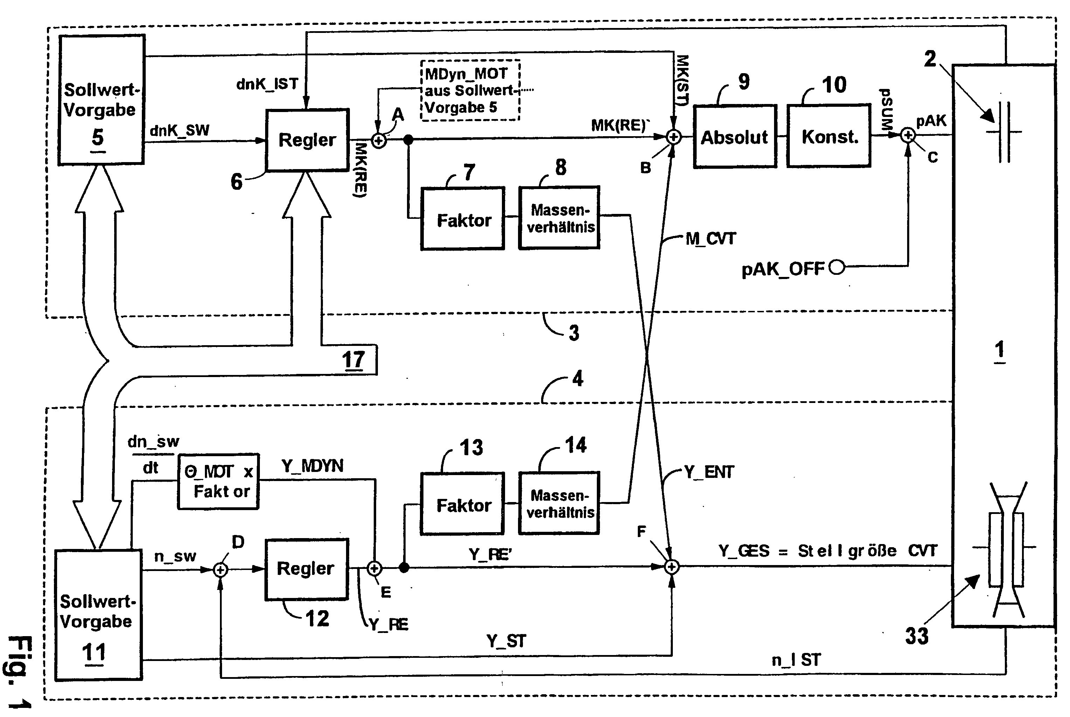

Fig. 1 zeigt eine Übersicht der beiden Regelkreise.

Mit Bezugszeichen 3 ist der erste Regelkreis zur Steuerung und Regelung der Kupplung 2 bezeichnet. Mit Bezugszeichen 4 ist der zweite Regelkreis zur Steuerung und Regelung eines stufenloses Getriebes 1 bezeichnet. In Fig. 1 ist mit dem Bezugszeichen 33 ein Variator dargestellt.

Unter Kupplung 2 im Sinne der Erfindung ist eine Anfahrkupplung zu verstehen. Diese kann dem stufenlosen Getriebe 1 vorgeschaltet sein oder der Wandlerüberbrückungskupplung oder einer im Getriebe integrierten Kupplung entsprechen.

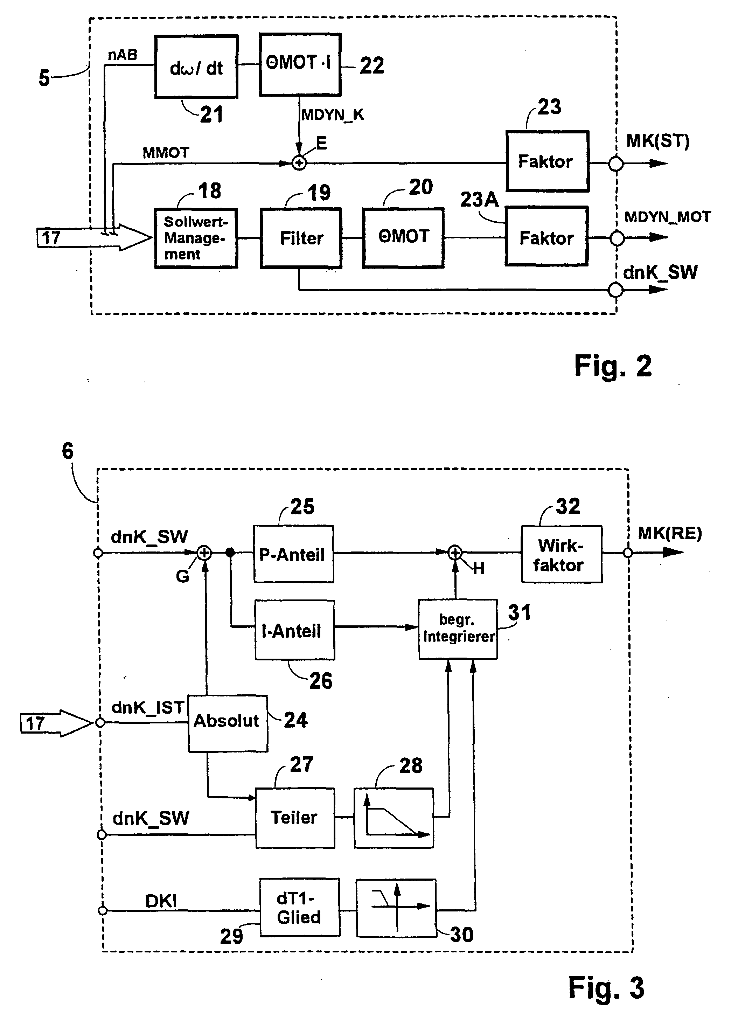

Sowohl dem ersten als auch dem zweiten Regelkreis 3, 4 werden Eingangsgrößen 17 zugeführt. Eingangsgrößen 17 sind: das Signal der Leistungsvorgabe durch einen Fahrer, z. B. Drosselklappeninformation DKI bzw. deren Gradient, das Moment einer nicht dargestellten Brennkraftmaschine, welches das stufenlose Getriebe 1 antreibt und die Ein-/Ausgangsdrehzahl der Kupplung 2. Der erste Regelkreis 3 besteht aus den Blöcken: Sollwert-Vorgabe 5, Regler 6, Faktor 7, Massenverhältnis 8, Absolutwert 9 und Konstante 10. Die Sollwert-Vorgabe 5 liefert als Ausgangsgrößen den Sollwert der Differenzdrehzahl dnK_SW Kupplung 2 und das gesteuerte Moment MK(ST) der Kupplung 2 sowie das dynamische Motormoment MDYN_MOT. Die innere Struktur der Sollwert-Vorgabe 5 wird in Verbindung mit der Fig. 2 erklärt. Am Regler 6 liegen die Eingangsgrößen 17, der Sollwert dnK_SW der Differenzdrehzahl der Kupplung 2 sowie der Istwert dnK_IST der Differenzdrehzahl der Kupplung 2 an. Die innere Struktur des Reglers 6 wird in Verbindung mit der Fig. 3 erklärt.

Ausgangsgröße des Reglers 6 ist das geregelte Moment MK(RE) der Kupplung 2. Aus dem geregelten Moment MK(RE) der Kupplung 2 und dem dynamischen Motormoment MDYN_MOT ergibt sich das geregelte Summenmoment MK(RE)', Summationspunkt A. Diese wird am Punkt B mit dem aus der Sollwert-Vorgabe 5 stammenden gesteuerten Moment MK(ST) der Kupplung 2 und dem entkoppelnden Moment M_CVT des stufenlosen Getriebes summiert. Von dieser Summe wird mittels des Funktionsblocks 9 der Absolutwert gebildet und das Ergebnis mit einer Konstanten gewichtet, Funktionsblock 10. Ausgangsgröße ist ein summierter Druck pSUM. Diesem summierten Druck pSUM wird am Summationspunkt C ein Druck-Offset pAK_OFF überlagert. Das sich hieraus ergebende Druckniveau pAK ist das auf die Kupplung 2 wirkende Druckniveau.

Der zweite Regelkreis 4 besteht aus: Sollwert-Vorgabe 11, Regler 12, Faktor 13, Massenverhältnis 14 sowie dem Produkt aus Motorträgheitsmoment mal dem Faktor 13. Der zweite Regelkreis 4 bestimmt den Ablauf der stufenlosen Verstellung.

Aus den Eingangsgrößen 17 bestimmt der Funktionsblock Sollwert-Vorgabe 11 den Sollwert n_SW der stufenlosen Verstellung, den gesteuerten Anteil der Stellgröße des CVT Y_ST.

Der Sollwert n_SW wird am Summationspunkt D mit dem Istwert n_IST der stufenlosen Verstellung verglichen. Der Istwert n_IST bestimmt sich aus Ausgangsgrößen des stufenlosen Getriebes 1. Die sich ergebende Regelabweichung ist die Eingangsgröße des Reglers 12. Der Reglerausgangswert Y_RG wird am Summationspunkt E zu dem dynamischen Momentenanteil Y_MDYN aus der Sollwert-Vorgabe 11 addiert. Hieraus ergibt sich der geregelte Anteil Y_RE'. Dieser wird am Summationspunkt F zu dem gesteuerten Anteil Y_ST und zu dem entkoppelnden Anteil Y_ENT addiert. Aus dem Ergebnis wird eine Stellgröße für das stufenlose Getriebe gebildet. Ergebnis ist die Stellgröße Y_GES für den Variator 33.

Der erste und zweite Regelkreis 3, 4 sind über ein Entkopplungsnetzwerk miteinander verbunden. Das Entkopplungsnetzwerk beinhaltet einen ersten Signalweg, in dem der Funktionsblock 7 und der Funktionsblock 8 angeordnet sind.

Die Eingangsgröße des ersten Signalwegs ist das geregelte Summenmoment MK(RE)'. Dieses wird mit einem Faktor, Funktionsblock 7, multipliziert. Dieser Faktor wird aufgrund von Versuchen abgestimmt. Das Ergebnis hieraus wird im Funktionsblock 8 mit dem Massenverhältnis von Motor-Masse zu der Summe aus Motor-Masse und Getriebe-Masse gewichtet. Ausgangsgröße ist sodann der entkoppelnde Anteil Y_ENT der Kupplung 2. Der zweite Signalweg des Entkopplungsnetzwerks weist die Funktionsblöcke 13 und 14 auf, deren Eingangsgröße ist der geregelte Anteil Y_RE' der stufenlosen Schaltung. Ausgangsgröße des zweiten Signalwegs ist das entkoppelnde Moment der stufenlosen Übersetzung M_ENT.

In Fig. 2 ist die innere Struktur der Sollwert-Vorgabe 5 dargestellt. Dieser werden die Eingangsgrößen 17 zugeführt. Im Funktionsblock 18, Sollwert-Management, wird aus den Eingangsgrößen Drehzahl der Brennkraftmaschine, Drosselklappeninformation DKI und Moment der Brennkraftmaschine ein Roh-Sollwert der Differenzdrehzahl der Kupplung 2 bestimmt. Dieser Wert wird sodann im Filter 19, üblicherweise als PT1-Glied mit Gradienten-Begrenzung ausgeführt, gefiltert. Eine Ausgangsgröße des Filters 19 ist der Sollwert dnk_SW der Differenzdrehzahl der Kupplung 2. Dieser Sollwert wird am Ausgang der Sollwert-Vorgabe 5 bereitgestellt. Eine weitere Ausgangsgröße des Filters 19 wird im Funktionsblock 20 mit dem Motorträgheitsmoment Theta-MOT und einem Faktor, Bezugszeichen 23A, verknüpft. Ausgangsgröße ist sodann das dynamische Moment der Brennkraftmaschine MDYN_MOT. Aus der Eingangsgröße Abtriebsdrehzahl der Kupplung nAB wird mittels des Funktionsblocks 21 der Winkelgeschwindigkeitsgradient dOmega/dt ermittelt. Das Ergebnis wird im Funktionsblock 22 mit dem Motorträgheitsmoment Theta-MOT und der aktuellen Übersetzung des stufenlosen Getriebes i multipliziert. Ausgangsgröße ist das dynamische Moment MDYN_K an der Kupplung 2 während einer stufenlosen Verstellung. Hierbei gilt folgende Beziehung:

in der Gradient-Einstellphase:

$$MDYN\_K = Theta\text{-}MOT \cdot i1 \cdot dOmega/dt$$

bzw. in der Gleitphase:

$$MDYN\_K = Theta\text{-}MOT \cdot i2 \cdot dOmega/dt$$

| MDYN_K | dynamisches Moment Kupplung |
|---|---|
| Theta-MOT | Trägheitsmoment Brennkraftmaschine |
| i1 | erste Übersetzungsstufe |
| i2 | zweite Übersetzungsstufe |
| dOmega/dt | Gradient Winkelgeschwindigkeit Kupplung |

Am Summationspunkt E wird sodann dieses dynamische Moment der Kupplung 2 mit dem von der Brennkraftmaschine abgegebenen Moment MMOT verknüpft. Das Ergebnis wird am Summationspunkt F zu dem zuvor berechneten dynamischen Moment der Brennkraftmaschine MDYN_MOT addiert. Das Ergebnis wird im Funktionsblock 23 mit einem abstimmbaren Faktor gewichtet, dessen Ausgangsgröße das gesteuerte Moment MK(ST) der Kupplung 2 ist.

In Fig. 3 ist die innere Struktur des Reglers 6 dargestellt. Diesem werden die Eingangsgrößen 17 sowie der Sollwert dnK_SW und der Istwert dnK_IST der Differenzdrehzahl der Kupplung 2 zugeführt. Aus dem Istwert dnK_IST wird im Funktionsblock 24 der Absolutwert gebildet. Dieser Absolutwert ist sodann die Eingangsgröße für den Teiler 27 bzw. den Summationspunkt G. Auf den Teiler 27 ist als zweite Eingangsgröße der Sollwert dnK_SW der Differenzdrehzahl der Kupplung 2 geführt. Der Quotient ist auf den Funktionsblock 28, Kennlinie dynamisches Absenken, geführt. Über diese Kennlinie wird bei sehr kleinen Schlupfwerten, z. B. kleiner 10 Umdrehungen, der Eingangswert des Intergrierers 31 künstlich vergrößert. Hierdurch wird eine zusätzliche rampenförmige Druckreduzierung erzielt. Der Einsatzpunkt ergibt sich aus dem Verhältnis von Ist- zu Sollwert der Drehzahldifferenz der Kupplung 2.

Die Eingangsgröße Drosselklappeninformation DKI ist das Eingangssignal für ein dT1-Glied 29. Das Ausgangssignal dieses Filters ist sodann das Eingangssignal für die Kennlinie "schnell Öffnen" 30. Über diese Kennlinie wird in Abhängigkeit der Leistungswunsch des Fahrers bzw. dessen Gradient bei schneller Gasrücknahme der Eingangswert des Integrierers 31 künstlich vergrößert. Hieraus ergibt sich eine zusätzliche rampenförmige Druckreduzierung. Die Druckreduzierung ist über die Kennlinie veränderbar.

Am Summationspunkt G wird der Sollwert dnK_SW mit dem im Funktionsblock 24 gebildeten Absolutwert des Istwertes der Differenzdrehzahl Kupplung 2 summiert. Das Ergebnis wird sodann parallel zum einen über einen Funktionsblock P-Anteil 25 und zum zweiten über einen I-Anteil 26 geführt.

Die Ausgangsgröße des P-Anteils 25 wirkt auf den Summationspunkt H. Die Ausgangsgröße des Funktionsblockes 26 wirkt auf den begrenzten Integrierer 31. Der Ausgangswert des begrenzten Integrierers 31 wird am Summationspunkt H mit dem Proportional-Anteil aus dem Funktionsblock 25 verknüpft und auf den Funktionsblock 32, Wirkfaktor, geführt. Über den Wirkfaktor wird bestimmt, in welche Richtung das aktuelle Regelmoment wirken soll. Dies ist zur Bestimmung des entkoppelnden Anteils Y_ENT notwendig.

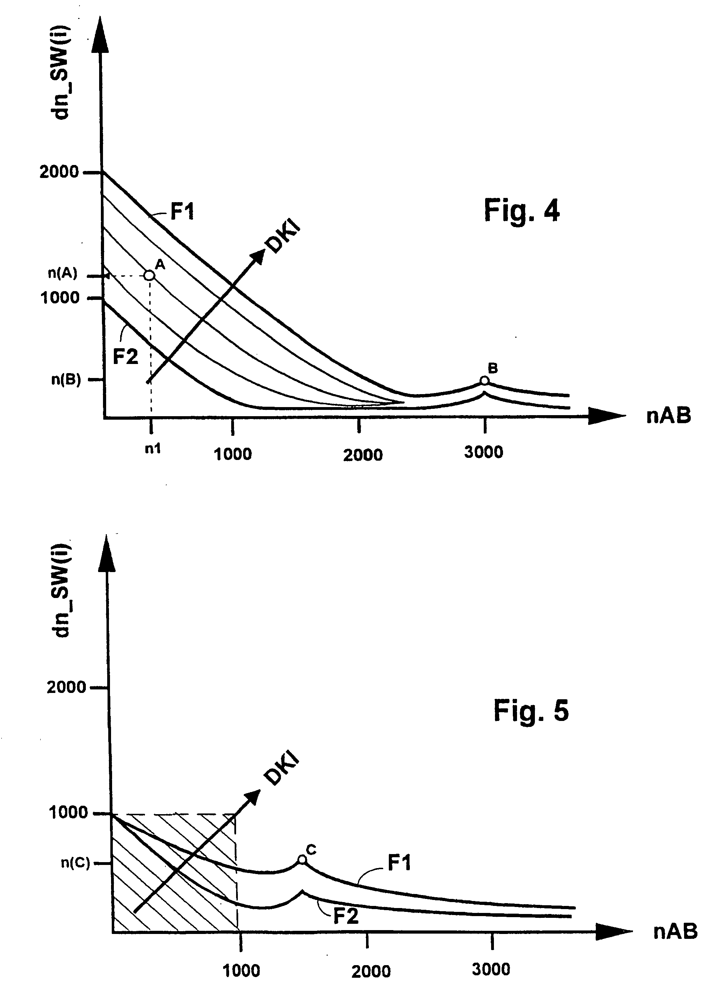

In Fig. 4 ist ein erstes Kennfeld KF1(i) des stufenlosen Getriebes 1 dargestellt. Dieses Kennfeld wird für Anfahrvorgänge verwendet. Mittels dieses Kennfelds KF1(i) wird eine gangabhängige Differenzdrehzahl dn_SWK(i) bestimmt. Eingangsgröße des ersten Kennfelds ist die Abtriebsdrehzahl nAB der Kupplung 2 sowie die Drosselklappeninformation DKI. Innerhalb des Kennfelds ist ein durch die beiden Begrenzungslinien F1 und F2 definierter Bereich dargestellt. Die Begrenzungslinie F2 entspricht hierbei dem Drosselklappenwert 0 %. Die Begrenzungslinie F1 entspricht dem Drosselklappenwert 100 %. Innerhalb dieses Bereichs ist eine Kennlinienschar von mehreren Drosselklappenwerten dargestellt.

Der Ablauf des Verfahrens ist folgendermaßen: Aus dem aktuellen Abtriebsdrehzahlwert nAB der Kupplung 2, hier der Wert nl, und dem aktuellen Drosselklappenwert, z. B. 50 %, ergibt sich der Betriebspunkt A. Aus diesem wiederum ergibt sich der gangabhängige Differenzdrehzahlwert dnK_SW(i), hier der Wert nA. Zusätzlich ist in Fig. 4 bei einer Abtriebsdrehzahl von 3 000 Umdrehungen eine Drehzahlüberhöhung, Punkt B, eingezeichnet. Über diese Drehzahlüberhöhung n(B) wird eine Schwingungsentkopplung zwischen Brennkraftmaschine und Abtrieb des stufenlosen Getriebes 1 erzielt. Die Lage des Punktes B bzw. der Wert n(B) ist abhängig von der verwendeten Brennkraftmaschine und wird in der Applikationsphase des stufenlosen Getriebes definiert.

In Fig. 5 ist ein zweites gangabhängiges Kennfeld KF2(i) dargestellt. Über dieses zweite Kennfeld KF2(i) wird die Differenzdrehzahl dn_SW(i) für Nicht-Anfahrübersetzungen des stufenlosen Getriebes bestimmt. Die Eingangsund Ausgangsgrößen entsprechen denen des ersten Kennfelds. Das Kennfeld enthält ebenfalls einen durch die beiden Begrenzungskennlinien F1 und F2 definierten Bereich. Die Begrenzungslinie F2 entspricht 0 % und die Begrenzungslinie F1 entspricht 100 Drosselklappeninformation DKI. Auf der Begrenzungslinie F1 ist ein Punkt C eingezeichnet. Diese Drehzahlüberhöhung, Wert n(c), bewirkt, daß die Kupplung im schlupfenden Zustand gehalten wird, so daß eine aktive Schwingungsentkopplung erzielt wird. Innerhalb des Kennfelds ist ein schraffiert gezeichneter Bereich dargestellt. Dieser Bereich dient dem Abwürgeschutz, d. h., bei kleinen Abtriebsdrehzahlen nAB der Kupplung 2 wird diese mit einem definierten Sollwert der Differenzdrehzahl beaufschlagt. Der Abwürgeschutz kann auch gemäß folgender Beziehung berechnet werden:

$$dnK\_SW(i) > NMOT\_MIN\text{-}nAB$$

| NMOT_MIN | minimalste Drehzahl der Brennkraftmaschine |
|---|---|
| nAB | Abtriebsdrehzahl der Kupplung 2 |

Das erste Kennfeld KF1(1) mit 1 = oder 2 wird für eine Anfahrübersetzung verwendet. Das zweite Kennfeld KF2(i), i = 3 bis n, wird für Nicht-Anfahrübersetzungen verwendet. Für jede Übersetzung existiert somit ein eigenes Kennfeld. Der Übergang vom ersten KF1(1) auf ein zweites KF2(i) Kennfeld erfolgt während der stufenlosen Verstellung des stufenlosen Getriebes 1.

Dies bedeutet, daß der Verlauf der Kennlinien gemäß dem ersten Kennfeld KF1(i) aus Fig. 4 über Zwischenkennfelder auf einen Verlauf gemäß der Fig. 5 angenähert wird. Diese Zwischenkennfelder sind nicht dargestellt.

Der Ablauf des erfindungsgemäßen Verfahrens ist folgendermaßen:

Im ersten Zustand, also in der Anfahrübersetzung, wird mittels des ersten Kennfelds KF1(i) der übersetzungsabhängige Differenzdrehzahlwert dn_SW(i) bestimmt. Dieser entspricht dem Sollwert der Differenzdrehzahl dnK_SW der Kupplung 2, da der Sollwert-Offset dnLS_SW Null ist. Mit sich erhöhender Abtriebsdrehzahl nAB der Kupplung 2 wird gemäß Fig. 4 dieser Sollwert reduziert. Hierbei kann, wie bei Fig. 4 ausgeführt, zur Erhöhung des Komfort ein höherer Sollwert eingestellt werden, um eine Schwingungsentkopplung zu erreichen.

Wird nun eine stufenlose Verstellung initiiert, so wird vom ersten Kennfeld KF1(i) auf ein zweites Kennfeld KF2(i) gemäß Fig. 5 gewechselt. Während der stufenlosen Verstellung wird über das Entkopplungsnetzwerk via zweitem Signalweg dem gesteuerten Moment MK(ST) und geregelten Summenmoment MK(RE)' ein Entkopplungsanteil M_CVT addiert. Via dem ersten Signalweg wird dem zu verstellenden Variator 33 ein Entkopplungsanteil Y_ENT der Kupplung 2 addiert.

Bezugszeichen

| 1 | stufenloses Getriebe |
|---|---|
| 2 | Kupplung |
| 3 | erster Regelkreis |
| 4 | zweiter Regelkreis |
| 5 | Sollwert-Vorgabe |
| 6 | Regler |
| 7 | Faktor |
| 8 | Berechnungsblock Massenverhältnis |
| 9 | Absolutwert |
| 10 | Konstante |
| 11 | Sollwert-Vorgabe |
| 12 | Regler |
| 13 | Faktor |
| 14 | Berechnungsblock: Massenverhältnis |
| 15 | - |
| 16 | - |
| 17 | Eingangsgrößen |
| 18 | Sollwert-Management |

| 19 | Filter |
|---|---|
| 20 | Trägkeitsmoment |
| 21 | Berechnungsblock dOmega/dt |
| 22 | Berechnungsblock |
| 23, 23A | Faktor |
| 24 | Absolutwert |
| 25 | P-Anteil |
| 26 | I-Anteil |
| 27 | Teiler |
| 28 | Kennlinie dynamisches Absenken |
| 29 | dT1-Glied |
| 30 | Kennlinie "schnell Öffnen" |
| 31 | begrenzter Intergrierer |
| 32 | Wirkfaktor |
| 33 | Variator |

| dn_SW(i) | übersetzungsabhängige Differenzdrehzahl |
|---|---|
| dnK_SW | Sollwert Differenzdrehzahl Kupplung |
| dnK_IST | Istwert Differenzdrehzahl Kupplung |
| MK(ST) | gesteuertes Moment Kupplung |
| MK(RE) | geregeltes Moment Kupplung |
| Y_ENT | entkoppelnder Anteil der Stellgröße des Variators |
| pAK_OFF | Druckoffset Anfahrkupplung |
| pSUM | summmierter Druck |
| pAK | Druckniveau Kupplung |
| MDYN_K | dynamisches Moment Kupplung |
| pLS_OFF | Druckoffset Lastschaltung |
| nAB | Abtriebsdrehzahl Kupplung |
| n_SW | Sollwert Drehzahl |
| n_IST | Istwert Drehzehl |
| Y_ST | gesteuerter Anteil der Stellgröße des Variators |
| Y_RE | geregelter Anteil der Stellgröße des Variators |
| Y_RE' | Summe der Anteile Y_RE und Y_MDYN |
| Y_ENT | entkoppelnder Anteil der Stellgröße des Variators |
| Y_MDYN | Sollgradienten-Anteil der Stellgröße des Variators |
| Y_GES | Stellgröße für Variator |
| MMOT | Motormoment |
| MDYN_MOT | dynamisches Motormoment |
| M_CVT | entkoppelndes Moment der Variatorregelung |
| DKI | Drosselklappeninformation = Laststellung |
| dnLS_SW | Sollwert-Offset |
| Theta_MOT | Motorträgheitsmoment |
| i_CVT | aktuelle Variatorübersetzung |

**Patentansprüche**

1. Verfahren und Einrichtung zum Steuern und Regeln einer Kupplung (2) in einem Kraftfahrzeugantrieb mit Stufenlosem Getriebe (1), bei dem ein elektronisches Steuergerät mittels eines Regelkreises das Verhalten der Kupplung (2) bestimmt, wobei zur Steuerung und Regelung der Kupplung (2) sowohl bei einem ersten Fahrzustand entsprechend einem Anfahrvorgang als auch bei einem zweiten Fahrzustand entsprechend dem Fahren mit variabler Übersetzung (i = var) ein erster Regelkreis (3) verwendet wird, **dadurch gekennzeichnet, daß** die Regelgröße für den ersten Regelkreis dem Istwert einer Differenzdrehzahl (dnK_IST) der Kupplung (2) äquivalent ist, und wobei die stufenlose Verstellung des stufenlosen Getriebes (1) maßgeblich von einem zweiten Regelkreis (4) bestimmt wird und der erste (3) und zweite Regelkreis (4) über ein Entkopplungsnetzwerk (7, 8, 13, 14) miteinander verbunden sind.

2. Verfahren und Einrichtung nach Anspruch 1, **dadurch gekennzeichnet, daß** das Entkopplungsnetzwerk einen ersten (7, 8) und zweiten Signalweg (13, 14) aufweist.

3. Verfahren und Einrichtung nach Anspruch 1 oder 2, **dadurch gekennzeichnet, daß** bei der stufenlosen Verstellung des stufenlosen Getriebes (1) der erste Regelkreis (3) mittels des Entkopplungsnetzwerkes via erstem Signalweg (7, 8) auf den zweiten Regelkreis (4) einwirkt (Y_ENT) und der zweite Regelkreis (4) mittels des Entkopplungsnetzwerkes via zweitem Signalweg (13, 14) auf den ersten Regelkreis (3) einwirkt.

4. Verfahren und Einrichtung nach einem der vorausgegangenen Ansprüche, **dadurch gekennzeichnet, daß** das Druckniveau (pAK) der Kupplung (2) sich aus einem Offsetwert (pAK_OFF) und einem Summenwert (pSUM) ergibt (pAK = pAK_OFF + pSUM), wobei der Summenwert (pSUM) maßgeblich aus der Bilanz von gesteuertem (MK (ST)) der Kupplung (2), geregeltem Summenmoment (MK(RE)') der Kupplung (2) und entkoppelndem Lastschaltmoment (MLS_ENT) bestimmt wird (pSUM = f(MK(ST), MK(RE)', MLS_ENT)).

5. Verfahren und Einrichtung nach Anspruch 4, **dadurch gekennzeichnet, daß** das gesteuerte Moment (MK(ST)) maßgeblich aus dem dynamischen Moment der Kupplung (MDYN_K) und dem Motormoment (MMOT) bestimmt wird (MK(ST) = f(MDYN_K, MMOT).

6. Verfahren und Einrichtung nach Anspruch 4, **dadurch gekennzeichnet, daß** das geregelte Summenmoment (MK (RE)') der Kupplung (2) aus dem dynamischen Motormoment (MDYN_MOT) und einem geregelten Moment (MK (RE)) der Kupplung (2) bestimmt wird.

7. Verfahren und Einrichtung nach Anspruch 4, **dadurch gekennzeichnet, daß** der entkoppelnde Anteil des Moments des stufenlosen Getriebeteils (M_CVT) sich aus dem Sollgradienten-Anteil der Stellgröße des stufenlosen Getriebes (Y_MDYN) und einem geregelten Stellanteil (Y_R) sowie einem Massenverhältnis Motor/stufenloses Getriebe (14) und einem Faktor (13) ergibt.

8. Verfahren und Einrichtung nach Anspruch 3, **dadurch gekennzeichnet, daß** der entkoppelnde Anteil (Y_ENT) der Kupplung (2) sich aus der Summe von dynamischem Motormoment (MDYN_MOT) und geregeltem Moment (MK(RE)) der Kupplung (2) sowie einem Massenverhältnis Motor/stufenloses Getriebe (8) und einem Faktor (7) ergibt.

9. Verfahren und Einrichtung nach Anspruch 7 oder 8, **dadurch gekennzeichnet, daß** man die Massenverhältnisberechnung in Abhängigkeit der Größe der Drehmassen und der aktuellen Übersetzung i_CVT durchführt.

10. Verfahren und Einrichtung nach Anspruch 6, **dadurch gekennzeichnet, daß** das geregelte Moment (MK(RE)) maßgeblich aus dem Soll-/Ist-Vergleich der Drehzahldifferenz (dnK_SW, dnK_IST) der Kupplung (2) und einer Leistungsvorgabe (DKI) eines Fahrers mittels eines Reglers (6) bestimmt wird.

11. Verfahren und Einrichtung nach Anspruch 10, **dadurch gekennzeichnet, daß** der Regler (6) einen begrenzten Integrierer (31) beinhaltet, wobei dem Integrierer (31) als Eingangsgrößen die Regelabweichung aus dem Soll-/Ist-Vergleich der Drehzahldifferenz (dnK_SW, dnK_IST) der Kupplung (2), die Verstellgeschwindigkeit der Leistungsvorgabe (DKI) und dem Verhältnis Ist- zu Sollwert der Differenzdrehzahl (dnK_IST/dnK_SW) der Kupplung (2) zugeführt wird.

12. Verfahren und Einrichtung nach einem der vorausgegangenen Ansprüche, **dadurch gekennzeichnet , daß** für beide Fahrzustände sich der Sollwert der Differenzdrehzahl (dnK_SW) der Kupplung (2) aus der Addition eines Sollwert-Offset (dnLS_SW) und einer übersetzungsabhängigen Differenzdrehzahl (dn_SW(i)) der Kupplung (2) ergibt.

13. Verfahren und Einrichtung nach Anspruch 12, **dadurch gekennzeichnet, daß** die übersetzungsabhängige Differenzdrehzahl (dn_SW(i)) für eine Anfahrübersetzung des stufenlosen Getriebes über ein erstes Kennfeld (KF1(i), i = 1, 2) bestimmt wird, wobei dieses eine Zuordnung von Leistungsvorgabe des Fahrers (DKI) und Abtriebsdrehzahl (nAB) der Kupplung (2) darstellt.

14. Verfahren und Einrichtung nach Anspruch 12, **dadurch gekennzeichnet, daß** die übersetzungsabhängige Differenzdrehzahl (dn_SW(i)) für Nicht-Anfahrübersetzungen des stufenlosen Getriebes über zweite Kennfelder (KF2 (i), i = 3...n) bestimmt wird, wobei diese eine Zuordnung von Leistungsvorgabe des Fahrers (DKI) und der Abtriebsdrehzahl (nAB) der Kupplung (2) darstellt.

**15.** Verfahren und Einrichtung nach Anspruch 13 oder 14, **dadurch gekennzeichnet, daß** zu jedem Kennfeld, beispielsweise KF1(i) oder KF2(i), eine Übersetzung (i) gehört, welche in Abhängigkeit von der jeweils aktuellen Übersetzung zwischen benachbarten Kennfeldern interpoliert wird.

**16.** Verfahren und Einrichtung nach Anspruch 14, **dadurch gekennzeichnet, daß** bei einer Fahrzeuggeschwindigkeit (v) kleiner einem Grenzwert (GW) eine erhöhte Differenzdrehzahl (dn_SW(i)) der Kupplung als Abwürgeschutz über das jeweilige zweite Kennfeld (KF(i)) eingestellt wird.

**17.** Verfahren und Einrichtung nach Anspruch 14, **dadurch gekennzeichnet, daß** im zweiten Fahrzustand bei einer Fahrzeuggeschwindigkeit (v) kleiner einem Grenzwert (GW) eine erhöhte Differenzdrehzahl (dn_SW(i)) der Kupplung als Abwürgeschutz gemäß folgender Beziehung berechnet wird:

$$dn\_SW(i) > NMOT\_MIN-nAB$$

| NMOT_MIN | Minimalste Drehzahl Brennkraftmaschine |
|---|---|
| nAB | Abtriebsdrehzahl der Kupplung (2) |

## Claims

**1.** Method and device for the open-loop and closed-loop control of a clutch (2) in a motor-vehicle drive having infinitely variable speed transmission, in which an electronic control unit determines the behaviour of the clutch (2) by means of a control loop, wherein a first control loop (3) is used for the open-loop and closed-loop control of the clutch (2) both during a first driving mode corresponding to a starting operation and during a second driving mode corresponding to driving with a variable gear ratio (i = var), **characterized in that** the controlled variable for the first control loop is equivalent to the actual value of a differential rotational speed (dnK_IST) of the clutch (2) and wherein the infinitely variable adjustment of the infinitely variable speed transmission (1) is substantially determined by a second control loop (4) and the first (3) and second control loop (4) are interconnected via a decoupling network (7, 8, 13, 14).

**2.** Method and device according to Claim 1, **characterized in that** the decoupling network has a first (7, 8) and second signal path (13, 14).

**3.** Method and device according to Claim 1 or 2, **characterized in that**, during the infinitely variable adjustment of the infinitely variable speed transmission (1), the first control loop (3) acts on the second control loop (4) (Y_ENT) by means of the decoupling network via the first signal path (7, 8) and the second control loop (4) acts on the first control loop (3) by means of the decoupling network via the second signal path (13, 14).

**4.** Method and device according to one of the preceding claims, **characterized in that** the pressure level (pAK) of the clutch (2) results from an offset value (pAK_OFF) and a sum value (pSUM) (pAK = pAK_OFF + pSUM), wherein the sum value (pSUM) is substantially determined by the balance of the open-loop controlled torque (MK(ST)) of the clutch (2), the closed-loop controlled sum torque (MK(RE)') of the clutch (2) and the decoupled powershift torque (MLS_ENT) (pSUM = f(MK(ST), MK(RE)', MLS_ENT)).

**5.** Method and device according to Claim 4, **characterized in that** the open-loop controlled torque (MK(ST)) is substantially determined by the dynamic torque of the clutch (MDYN_K) and the engine torque (MMOT) (MK(ST) = f (MDYN_K, MMOT).

**6.** Method and device according to Claim 4, **characterized in that** the closed-loop controlled sum torque (MK(RE)') of the clutch (2) is determined by the dynamic motor torque (MDYN_MOT) and a closed-loop controlled torque (MK(RE)) of the clutch (2).

**7.** Method and device according to Claim 4, **characterized in that** the decoupling component of the torque of the infinitely variable speed transmission term (M_CVT) results from the desired gradient component of the manipulated variable of the infinitely variable speed transmission (Y_MDYN) and a closed-loop controlled setting component (Y_R) and also an engine/infinitely variable speed transmission (14) mass ratio and a factor (13).

8. Method and device according to Claim 3, **characterized in that** the decoupling component (Y_ENT) of the clutch (2) results from the sum of the dynamic engine torque (MDYN_MOT) and the closed-loop controlled torque (MK (RE)) of the clutch (2) and also an engine/infinitely variable speed transmission (8) mass ratio and a factor (7).

9. Method and device according to Claim 7 or 8, **characterized in that** the mass ratio calculation is performed as a function of the magnitude of the rotating masses and the actual gear ratio i_CVT.

10. Method and device according to Claim 6, **characterized in that** the closed-loop controlled torque (MK(RE)) is substantially determined by the desired/actual comparison of the rotational speed difference (dnK_SW, dnK_IST) of the clutch (2) and a power setting (DKI) of a driver by means of a closed-loop controller (6).

11. Method and device according to Claim 10, **characterized in that** the closed-loop controller (6) comprises a limited integrator (31), wherein the control error resulting from the desired/actual comparison of the rotational speed difference (dnK_SW, dnK_IST) of the clutch (2), the adjustment speed of the power setting (DKI) and the actual to desired value of the differential rotational speed (dnK_IST/dnK_SW) ratio of the clutch (2) are fed to the integrator (31) as input variables.

12. Method and device according to one of the preceding claims, **characterized in that** the desired value of the differential rotational speed (dnK_SW) of the clutch (2) results from the addition of a desired value offset (dnLS_SW) and a gear-ratio-dependent differential rotational speed (dn_SW(i)) of the clutch (2) for both driving modes.

13. Method and device according to Claim 12, **characterized in that** the gear-ratio-dependent differential rotational speed (dn_SW(i)) is determined for a start-up gear ratio of the infinitely variable speed transmission by means of a first family of characteristics (KF1(i), i = 1, 2), wherein the latter represents an assignment of power setting of the driver (DKI) and output rotational speed (nAB) of the clutch (2).

14. Method and device according to Claim 12, **characterized in that** the gear-ratio-dependent differential rotational speed (dn_SW(i)) is determined for non-start-up gear ratios of the infinitely variable speed transmission by means of second families of characteristics (KF2(i), i = 3...n) wherein the latter represent an assignment of power setting of the driver (DKI) and of the output rotational speed (nAB) of the clutch (2).

15. Method and device according to Claim 13 or 14, **characterized in that** there belongs to each family of characteristics, for example KF1(i) or KF2(i), a gear ratio (i) which is interpolated between adjacent families of characteristics as a function of the respective actual gear ratio.

16. Method and device according to Claim 14, **characterized in that**, in the case of a vehicle speed (v) less than a limit value (GW), an increased differential rotational speed (dn_SW(i)) of the clutch is set as stalling protection via the respective second family of characteristics (KF(i)).

17. Method and device according to Claim 14, **characterized in that** for a vehicle speed (v) less than a limit value (GW) in the second driving mode, an increased differential rotational speed (dn_SW(i)) of the clutch is calculated as stalling protection in accordance with the following relationship:

$$dn\_SW(i) > NMOT\_MIN-nAB$$

| NMOT_MIN | Most minimum rotational speed of the internal combustion engine |
|---|---|
| nAB | Output rotational speed of the clutch (2) |

## Revendications

1. Procédé et dispositif pour commander et régler un embrayage (2) dans un entraînement de véhicule automobile avec transmission réglable en continu (1) dans lequel un appareil de commande électronique détermine le comportement de l'embrayage (2) au moyen d'un circuit de régulation, dans lequel, pour la commande et la régulation de l'embrayage (2), on utilise un premier circuit de régulation (3) aussi bien dans un premier état de conduite, qui correspond à un processus de démarrage, que dans un deuxième état de conduite qui correspond à la conduite avec rapport de transmission variable (i = var), **caractérisé en ce que** la grandeur réglée pour le premier circuit de régulation est équivalente à la valeur réelle d'une vitesse de rotation différentielle (dnK_IST) de l'embrayage (2), et le réglage en continu de la transmission réglable en continu (1) est déterminé de façon prédominante par un deuxième circuit de régulation (4), et le premier (3) et le deuxième (4) circuit de régulation sont reliés l'un à l'autre par l'intermédiaire d'un réseau de découplage (7, 8, 13, 14).

**2.** Procédé et dispositif selon la revendication 1, **caractérisé en ce que** le réseau de découplage comprend un premier trajet de signaux (7, 8) et un deuxième trajet de signaux (13, 14).

**3.** Procédé et dispositif selon la revendication 1 ou 2, **caractérisé en ce que**, dans le réglage en continu de la transmission réglable en continu (1), le premier circuit de régulation (3) agit sur le deuxième circuit de régulation (4) (Y_ENT) au moyen du circuit de découplage, par le premier trajet de signaux (7, 8) et le deuxième circuit de régulation (4) agit sur le premier circuit de régulation (3) au moyen du réseau de découplage, par le deuxième trajet de signaux (13, 14).

**4.** Procédé et dispositif selon l'une des revendications précédentes, **caractérisé en ce que** le niveau de pression (pAK) de l'embrayage (2) est déterminé sur la base d'une valeur offset (pAK_OFF) et d'une valeur somme (pSUM), (pAK = pAK_OFF + pSUM) où la valeur somme (pSUM) est déterminée de façon prédominante par la balance du couple somme commandé (MK(ST)) de l'embrayage (2), du couple réglé (MK(RE)') de l'embrayage (2) et du couple de commutation en charge découplant (MLS_ENT), (pSUM = f (MK(ST), MK(RE)', (MLS_ENT)).

**5.** Procédé et dispositif selon la revendication 4, **caractérisé en ce que** le couple commandé (MK(ST)) est déterminé de façon prédominante sur la base du couple dynamique de l'embrayage (MDYN_K) et du couple moteur (MMOT), (MK(ST) = f (MDYN_K, MMOT).

**6.** Procédé et dispositif selon la revendication 4, **caractérisé en ce que** le couple somme réglé (MK(RE)') de l'embrayage (2) est déterminé sur la base du couple moteur dynamique (MDYN_MOT) et d'un couple réglé (MK(RE)) de l'embrayage (2).

**7.** Procédé et dispositif selon la revendication 4, **caractérisé en ce que** la fraction découplante du couple de la partie réglable en continu de la transmission (M_CVT) est déterminée sur la base de la fraction du gradient de consigne de la grandeur de réglage de la transmission réglable en continu (Y_MDYN) et d'une fraction de réglage réglée (Y_R) ainsi que d'un rapport de masse moteur/variation réglable en continu (14) et d'un facteur (13).

**8.** Procédé et dispositif selon la revendication 3, **caractérisé en ce que** la proportion découplante (Y_ENT) de l'embrayage (2) est donnée par la somme du couple moteur dynamique (MDYN_MOT) et du couple réglé (MK(RE)) de l'embrayage (2) ainsi qu'un rapport de masse moteur/transmission réglable en continu (8) et un facteur (7).

**9.** Procédé et dispositif selon la revendication 7 ou 8, **caractérisé en ce qu'**on effectue le calcul du rapport de masse en fonction de la valeur des masses tournantes et du rapport de transmission actuel i_CVT.

**10.** Procédé et dispositif selon la revendication 6, **caractérisé en ce que** le couple réglé (MK(RE)) est déterminé de façon prédominante sur la base de la comparaison consigne/réelle de la différence de vitesse de rotation (dnK_SW, dnK_IST) de l'embrayage (2) et d'une demande de puissance (DKI) d'un conducteur au moyen d'un régulateur (6).

**11.** Procédé et dispositif selon la revendication 10, **caractérisé en ce que** le régulateur (6) renferme un intégrateur limité (31), l'écart de régulation tiré de la comparaison consigne/réelle de la différence de vitesse de rotation (dnK_SW, dnK_IST) de l'embrayage (2), la vitesse de correction de la demande de puissance (DK1) et le rapport valeur réelle/valeur de consigne de la vitesse de rotation différentielle (dnK_IST/dnK_SW) de l'embrayage (2) étant transmis à l'intégrateur (31) en tant que grandeurs d'entrée.

**12.** Procédé et dispositif selon l'une des revendications précédentes, **caractérisé en ce que**, pour les deux états de conduite, on obtient la valeur de consigne de la vitesse de rotation différentielle (dnK_SW) de l'embrayage (2) sur la base de l'addition d'une valeur de consigne-offset (dnLS_SW) et d'une vitesse de rotation différentielle de l'embrayage (2) qui est fonction du rapport de transmission (dn_SW(i)).

**13.** Procédé et dispositif selon la revendication 12, **caractérisé en ce que** la vitesse de rotation différentielle (dn_SW(i)) fonction du rapport de transmission est déterminée pour un rapport de transmission de démarrage de la transmission réglable en continu au moyen d'un premier diagramme (KF1(i), i = 1, 2), ce diagramme représentant une relation entre la demande de puissance du conducteur (DKI) et la vitesse de rotation de sortie (nAB) de l'embrayage (2).

**14.** Procédé et dispositif selon la revendication 12, **caractérisé en ce que** la vitesse de rotation différentielle (dn_SW(i)) fonction du rapport de transmission est déterminée pour des rapports de transmission de non-démarrage de la transmission réglable en continu au moyen d'un deuxième diagramme (KF2(i), i = 3...n), le diagramme représentant une relation entre la demande de puissance du conducteur (DKI) et la vitesse de rotation de sortie (nAB) de l'embrayage (2).

**15.** Procédé et dispositif selon la revendication 13 ou 14, **caractérisé en ce qu'**à chaque diagramme, par exemple KF1 (i) ou KF2 (i), correspond un rapport de transmission (i) qui est interpolé en fonction du rapport de transmission actuel entre des diagrammes voisins.

**16.** Procédé et dispositif selon la revendication 14, **caractérisé en ce qu'**à une vitesse du véhicule (v) inférieure à une valeur limite (GW), une vitesse de rotation différentielle plus grande (dn_SW(i)) de l'embrayage est établie en tant que protection anticalage au moyen du diagramme (KF(i)) qui est le deuxième au moment considéré.

**17.** Procédé et dispositif selon la revendication 14, **caractérisé en ce que**, dans le deuxième état de conduite, à une vitesse du véhicule (v) inférieure à une valeur limite (GW), une vitesse de rotation différentielle plus grande (dn_SW(i)) de l'embrayage est calculée en tant que protection anticalage en appliquant la relation suivante :

$$dn\_SW(i) > NMOT\_MIN\text{-}nAB$$

| NMOT_MIN | vitesse de rotation minimale du moteur à combustion interne |
|---|---|
| nAB | vitess de rotation de sortie de l'embrayage (2). |

Fig. 1

**Fig. 2**

**Fig. 3**

Fig. 4

Fig. 5